# EUROPÄISCHE PATENTSCHRIFT

(11) **EP 0 851 844 B1**
(45) Veröffentlichungstag und Bekanntmachung des Hinweises auf die Patenterteilung: **30.10.2002**
(21) Anmeldenummer: 96926258.3
(22) Anmeldetag: 13.08.1996
(51) Int. Cl.: C02F 3/12

(54) **VERFAHREN ZUR REINIGUNG VON ABWASSER**
PROCESS FOR PURIFYING WASTE WATER
PROCEDE D'EPURATION DES EAUX USEES

(30) Priorität: 28.08.1995 AT 144595; 06.10.1995 AT 165895; 01.12.1995 AT 65595
(43) Veröffentlichungstag der Anmeldung: 08.07.1998
(73) Patentinhaber: INGERLE, Kurt, A-6020 Innsbruck (AT)
(72) Erfinder: INGERLE, Kurt, A-6020 Innsbruck (AT)
(74) Vertreter: Torggler, Paul Norbert, Dr.
(86) Internationale Anmeldenummer: AT9600144
(87) Internationale Veröffentlichungsnummer: WO97008104

(56) Entgegenhaltungen:
- EP-A- 0 002 769
- EP-A- 0 217 962
- DE-A- 2 122 891
- FR-A- 2 337 107
- US-A- 3 977 965
- US-A- 4 337 151

## Beschreibung

Die Erfindung bezieht sich auf ein Verfahren zur Reinigung von Abwasser mittels Belebtschlamm, in dem das zu reinigende Abwasser zunächst in ein belüftbares Belebungsbecken und anschließend in ein Sedimentationsbecken eingeleitet wird, in welchem eine Trennung von Schlamm und Klarwasser erfolgt, woraufhin Schlamm in das Belebungsbecken rückgeführt und Klarwasser abgezogen wird.

Bei derartigen Verfahren (vgl. AT-B 395 413) werden in einem biologischen Reaktor - im Belebungsbecken - unter Sauerstoffzufuhr organische Kohlenstoffverbindungen durch Bakterien abgebaut und in Belebtschlamm umgewandelt. Zusätzlich erfolgen Nitrifikation, Denitrifikation und d(e Entfernung von Phosphor. Im anschließenden Nachklärbecken sedimentiert der Belebtschlamm, und das Klarwasser kann abgezogen werden. Zur Aufrechterhaltung des Prozesses muß der sedimentierte Belebtschlamm wieder in das Belebungsbecken zurückgepumpt werden. 5 - 10 % des Schlammes werden pro Tag als Überschußschlamm aus dem System entfernt.

Nachteilig am bekannten Verfahren ist, daß das Nachklärbecken lediglich der Trennung von Schlamm und Klarwasser dient, wogegen die allenfalls dort ablaufenden biochemischen Prozesse ohne praktische Bedeutung sind.

Erfindungsgemäß ist hingegen vorgesehen, daß im Sedimentatlonsbecken mehrmals am Tag ein Betrlebszyklus abläuft, bei dem der Schlamm wieder mit dem Wasser vermischt wird (Rührphase), und daß die Abzugsphase des Betriebszyklus durch ein Intervall (Vorabsetzphase) von der Rührphase getrennt ist.

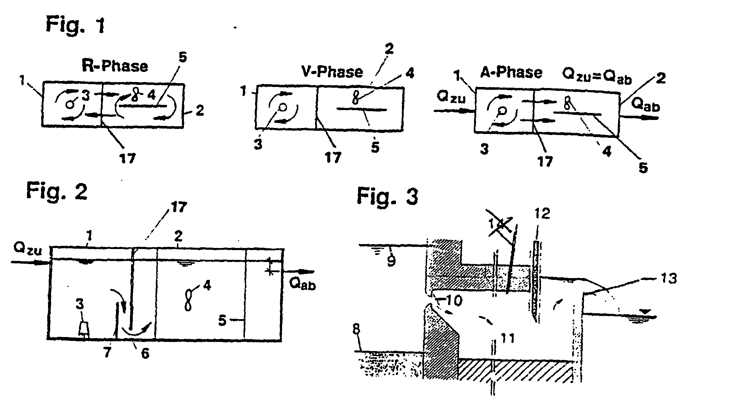

Weitere Einzelheiten der Erfindung werden anschließend anhand der Zeichnung erläutert. In dieser ist Fig. 1 eine schematische Draufsicht auf eine erfindungsgemäße Einrichtung unter Andeutung von drei verschiedenen Funktionsphasen, Fig. 2 ein vergrößerter Querschnitt durch eine Einrichtung nach Fig. 1, Fig. 3 ein Querschnitt durch ein vergrößertes Detail von Fig. 2.

Das Ausführungsbeispiel weist eine räumlich benachbarte Anordnung von Belebungsbecken 1 und Sedimentationsbecken 2 auf. Die Trennwand 14 zwischen diesen beiden Becken ist mit einer über die ganze Breite der Becken durchgehenden unteren Öffnung 6 versehen, sodaß sich die Becken 1, 2 als kommunizierende Gefäße verhalten. Im Belebungsbecken 1 befindet sich ein Belüfter 3 zur Eintragung von Sauerstoff.

Das erfindungsgemäße Aufwirbeln des Schlammes im Sedimentationsbehälter 2 kann durch einen Propeller 4 erfolgen, welcher gleichzeitig eine Strömung erzeugt, die den Inhalt der Becken 1 und 2 homogenisiert, sodaß in beiden Becken annähernd gleicher Trockensubstanzgehalt und annähernd gleiches Schtammalter gegeben sind.

Bei der Einrichtung nach Fig. 1 erzeugt der Propeller 4 eine umlaufende Strömung um eine in der Beckenmitte vom Boden hochstehende Leitwand 5, wobei diese Strömung nur in einer Rührphase aufrechterhalten wird, in der es zur Homogenisierung der Behälterinhalte und zur Rückverfrachtung von Schlamm in das Belebungsbecken 1 kommt

Wie aus Fig. 1 hervorgeht, schließt an die Rührphase R ein Intervall an (Vorabsetzphase V), in welchem im Sedimentationsbehälter 2 ein Absinken des Schlammes erfolgt, ohne daß bereits Klarwasser abgezogen wird. Um besonders in dieser Phase eine Störung der Schlammablagerung durch den Belüfter 3 im Belebungsbecken 1 zu vermeiden, wird zweckmäßigerweise der Öffnung 6 eine Prallwand 7 vorgelagert. Diese bewirkt, daß im Zwischenraum zwischen Prallwand 7 und Trennwand 17 zwischen den beiden Becken Luftblasen nach oben entweichen, sodaß - abgesehen allenfalls von der Rührphase - nur blasenfreier Schlamm in das Sedimentationsbecken 2 gelangen kann. In der V-Phase senkt sich der Schlammspiegel so weit ab (> 50 cm), daß Klarwasser in der darauffolgenden Abzugs(A)Phase abgezogen werden kann.

Der Abfluß aus einer aus den Becken 1 und 2 bestehenden Anlage erfolgt nur in der A-Phase. Der Zufluß kann kontinuierlich in allen drei Phasen oder auch nur in einer oder zwei Phasen erfolgen. Eine Anlage wird im freien Gefälle durchflossen, wenn der Zu- und Abfluß nur in der A-Phase stattfindet und gleich groß ist (Q_{zu} = Q_{ab}). Mehrere Anlagen können so phasenverschoben betrieben werden, daß immer mindestens eine A-Phase zur Verfügung steht. Der Kläranlagenablauf entspricht dann dem Kläranlagenzulauf.

Fig. 3 zeigt einen möglichen Klarwasserabzug. In der A-Phase, wenn der Schlammspiegel 8 schon mehr als 50 cm unter dem Wasserspiegel 9 liegt, wird über kreisrunde, im Abstand von 1,0 m angeordnete, ca. 30 cm unter dem Wasserspiegel liegende, mit Klappen abgedeckte Abflußöffnungen 10 mit ca. 8 cm Durchmesser Klarwasser abgezogen. Das Klarwasser gelangt anschließend in eine mit einem elektrischen Schieber 12 abschließbaren Druckkanal 11. Der Abfluß aus dem Sedimentationsbecken 2 wird durch diesen Schieber (Auf- und Zustellung) geregelt, dem ein fester Überfall 13 zur Haltung eines gewünschten Wasserspiegels in den Becken nachgeschaltet ist.

Zur Berechnung der zulässigen Abzugsmenge aus dem Sedimentationsbecken 2 (Q_{ab}) ist davon auszugehen, daß während der gesamten A-Phase der Schlammspiegel immer mindestens 50 cm unter dem Wasserspiegel liegen soll. Näherungsweise und auf der sicheren Seite liegend kann man annehmen, daß die in der A-Phase gebildete Klarwassermenge auch abgezogen werden kann. Die V-Phase dient dann der Schaffung des für das Abziehen benötigten Klarwasserkörpers von mindestens 50 cm Stärke. Die Schaffung von Klarwasser wird dann von der Sinkgeschwindigkeit des Schlammspiegels vₛ bestimmt, die annähernd konstant vorausgesetzt werden kann.

Bei kontinuierlichem Zufluß steigt der Wasserspiegel in den Becken während der Rund V-Phase an. In einem solchen Fall kann mit einer zweigeteilten Vorabsetzphase gearbeitet werden, wobei zunächst der Flüssigkeitsspiegel in den Becken ansteigt und dann mit Hilfe eines festen Überfalles konstant gehalten wird. Durch diese Maßnahme verkleinert sich in der anschließenden A-Phase die Abzugsmenge und die Abzugszeit kann verkürzt werden.

Ein besonderer Vorteil der Erfindung liegt darin, daß die Homogenisierung des Inhaltes der Becken 1 und 2 es ermöglicht, den Trockensubstanzgehalt in dem Sedimentationsbecken zu messen, aus dem der Oberschußschlamm abgezogen wird. Am Ende der V-Phase, vor Beginn der A-Phase, muß der Schlammspiegel schon so tief abgesunken sein (z.B. ca. 75 cm), daß feststoffreies Klarwasser in der A-Phase abgezogen werden kann. In dieser Zeit wird eine schwimmende Überschußschlammpumpe kurzzeitig in Betrieb genommen (z.B. automatischer Überschußschlammabzug ca. 1 bis 2 Minuten). Ist der Schlammspiegel noch zu hoch, wird konzentriert Überschußschlamm abgezogen, ist er schon zu tief, überwiegt der Abzug von Klarwasser. Das abgezogene Schlamm-Klarwasser-Gemisch gelangt in einen Schlammspeicher, wo sich der Schlamm absetzt. Das feststoffreie Trübwasser wird über einen Rücklauf wieder in das Belebungsbecken geleitet. Der sich im Schlammspeicher eindickende Schlamm ist von Zeit zu Zeit abzuziehen und zu entfernen.

Eine andere Möglichkeit, Überschußschlamm automatisch abzuziehen, besteht darin, den Schlammspiegel am Ende der V-Phase mit einem Schlammspiegelmeßgerät zu messen und den Überschußschlammabzug in Abhängigkeit der Lage des Schlammspiegels vorzunehmen. Diese Methode kann z.B. mit Hilfe eines schwimmenden Dichtemeßgerätes und einer am Beckenboden angeordneten, mit einem elektrischen Schieber versehenen Schlammleitung erfolgen. Liegt der Schlammspiegel z.B. am Ende der V-Phase unter 75 cm unter dem Wasserspiegel, so wird kein Schlamm abgezogen, liegt er darüber, kommt es zu einem Schlammabzug. Diese Methode - hauptsächlich für größere Kläranlagen geeignet - hat den Vorteil, daß nur schon eingedickter Schlamm abgezogen und ein Schlammspeicher zur Trennung von Schlamm und Klarwasser nicht benötigt wird.

Einer erfindungsgemäßen Anlage kann ein Abwasser- oder Prozeßwasserspeicher, eine Rechen- oder Siebanlage, ein Sand- und Fettabscheider, eine Vorklärung, ein Anaerob-Becken bzw. nur einzelne dieser Anlageteile vorgeschaltet werden. Einen Filter zur weitergehenden Reinigung kann man nachschalten.

Der Vorteil des erfindungsgemäßen Verfahrens liegt in der hohen Reinigungsleistung, dem sehr geringen Volumenbedarf für Becken und der auf ein Minimum reduzierten maschinellen Einrichtung, was eine hohe Wirtschaftlichkeit bewirkt. Die Belüftungseinrichtungen sind nur im Belebungsbecken erforderlich und stehen sauerstoffgesteuert praktisch immer in Betrieb. Die Aufwirbelung des sedimentierten und die Kreislaufführung des ins Sedimentationsbecken verlagerten Schlammes wird durch einfache Rührwerke bewirkt. Weiters kann mit sehr hoher Trockensubstanz (5,0 bis 8,0 g/l) im System gearbeitet werden. Schließlich wird das Sedimentationsbecken optimal genutzt, da bei kleiner hydraulischer Belastung (Trockenwetter TW) die biochemischen Prozesse und bei hoher (Regenwetter RW) die hydraulischen bevorzugt werden können.

## Patentansprüche

1. Verfahren zur Reinigung von Abwasser mittels Belebtschlamm, in dem das zu reinigende Abwasser zunächst in ein belüftbares Belebungsbecken und anschließend in ein Sedimentationsbecken eingeleitet wird, in welchem eine Trennung von Schlamm und Klarwasser erfolgt, woraufhin Schlamm in das Belebungsbecken rückgeführt und Klarwasser abgezogen wird, **dadurch gekennzeichnet, daß** im Sedimentationsbecken mehrmals am Tag ein Betriebszyklus abläuft, bei dem der Schlamm wieder mit dem Wasser vermischt wird (Rührphase R), und daß die Abzugsphase (A) des Betriebszyklus durch ein Intervall (Vorabsetzphase V) von der Rührphase (R) getrennt ist.

2. Verfahren nach Anspruch 1, **dadurch gekennzeichnet, daß** in der Rührphase (R), der Inhalt des Sedimentationsbeckens (2) homogenisiert wird.

3. Verfahren nach Anspruch 2, **dadurch gekennzeichnet, daß** in der Rührphase (R) so viel Schlamm in das Belebungsbecken (1) rückgeführt wird, daß dort etwa die gleiche Dichte an Trockensubstanz (TS) entsteht wie im Sedimentationsbecken (2).

4. Verfahren nach Anspruch 3, **dadurch gekennzeichnet, daß** während der Rührphase (R) der Inhalt des Belebungsbeckens (1) mit dem des Sedimentationsbeckens (2) bis zur weitgehenden Homogenisierung vermischt wird.

5. Verfahren nach Anspruch 1, **dadurch gekennzeichnet, daß** die Vorabsetzphase (V) so weit ausgedehnt wird, bis der Schlammspiegel mindestens 50 cm abgesunken ist, damit möglichst keine Schlammflocken in den Ablauf geraten.

6. Verfahren nach einem der Ansprüche 1 - 5, **dadurch gekennzeichnet, daß** der Abzug von Überschußschlamm jeweils beispielsweise zwei Minuten lang am Ende der Vorabsetzphase (V) erfolgt, wobei eine Pumpe das Klarwasser/Schlammgemisch in einen Schlammspeicher fördert und überschüssiges Trübwasser in die Reinigungsanlage rückgeleitet wird.

7. Verfahren nach einem der Ansprüche 1 - 6, **dadurch gekennzeichnet, daß** der Abzug von Überschußschlamm in Abhängigkeit von dem durch einen Dichtemesser festgestellten Trockensubstanzgehalt im Sedimentationsbecken (2) erfolgt.

8. Einrichtung zur Durchführung des Verfahrens nach einem der Ansprüche 1 bis 7, mit einem Belebungsbecken (1) und einem diesem nachgeschalteten Sedimentationsbecken (2) und einer Einrichtung zur Rückführung von Schlamm aus dem Sedimentatiönsbecken (2) in das Belebungsbecken (1), **dadurch gekennzeichnet, daß** die beiden Becken aneinandergrenzen und im Bodenbereich durch eine Öffnung (6) verbunden sind.

9. Einrichtung zur Durchführung des Verfahrens nach einem der Ansprüche 1 bis 7, **dadurch gekennzeichnet, daß** das Sedimentationsbecken (2) mindestens einen etwa 20 bis 30 cm unter der Wasseroberfläche liegenden Ablauf (10) aufweist, an welchen ein Druckkanal (11) mit Absperrschieber (12) und festem Überfall (13) anschließt.

## Claims

1. A process for purifying waste water by means of activated sludge, in which the waste water to be purified is firstly introduced into an aeratable activation basin and then into a sedimentation basin in which the sludge and clear water are separated, whereupon sludge is returned into the activation basin and clear water is drawn off, **characterised in that** an operating cycle takes place in the sedimentation basin several times a day, in which the sludge is again mixed with the water (agitation phase R) and that the draw-off phase (A) of the operating cycle is separated from the agitation phase (R) by an interval (pre-sedimentation phase V).

2. A process according to claim 1 **characterised in that** in the agitation phase (R) the content of the sedimentation basin (2) is homogenised.

3. A process according to claim 2 **characterised in that** in the agitation phase (R) so much sludge is returned into the activation basin (1) that there approximately the same density of dry substance (TS) occurs as in the sedimentation basin (2).

4. A process according to claim 3 **characterised in that** during the agitation phase (R) the content of the activation basin (1) is mixed with that of the sedimentation basin (2) until a condition of substantial homogenisation is reached.

5. A process according to claim 1 **characterised in that** the pre-sedimentation phase (V) is continued until the level of sludge has fallen at least 50 cm so that as far as possible no sludge flakes pass into the discharge.

6. A process according to one of claims 1 to 5 **characterised in that** the withdrawal of excess sludge is effected in each case for example for two minutes at the end of the pre-sedimentation phase (V), wherein a pump conveys the clear water/sludge mixture into a sludge storage device and excess cloudy water is returned to the purification installation.

7. A process according to one of claims 1 to 6 **characterised in that** the withdrawal of excess sludge is effected in dependence on the content of dry substance in the sedimentation basin (2), as is detected by a density measuring device.

8. Apparatus for carrying out the process according to one of claims 1 to 7 comprising an activation basin (1) and a sedimentation basin (2) connected downstream thereof and a device for the return of sludge from the sedimentation basin (2) into the activation basin (1), **characterised in that** the two basins are mutually adjoining and are connected in the bottom region through an opening (6).

9. Apparatus for carrying out the process according to one of claims 1 to 7 **characterised in that** the sedimentation basin (2) has at least one discharge (10) which is about 20 to 30 cm below the surface of the water and to which is connected a pressure channel (11) with shut-off slider (12) and a fixed weir (13).

## Revendications

1. Procédé d'épuration des eaux usées avec des boues activées, dans lequel les eaux usées à épurer sont tout d'abord introduites dans un bassin d'activation pouvant être aéré puis dans un bassin de sédimentation, dans lequel les boues sont séparées de l'eau décantée, les boues étant ensuite ramenées dans le bassin d'activation et l'eau décantée éliminée, **caractérisé en ce que** le bassin de sédimentation est soumis à plusieurs cycles opérationnels par jour, au cours desquels les boues sont de nouveau mélangées à l'eau (phase de brassage R), et **caractérisé en ce que** la phase d'écoulement (A) du cycle opérationnel est séparée par un intervalle (phase de dépôt préliminaire V) de la phase de brassage (R).

2. Procédé selon la revendication 1, **caractérisé en ce qu'**au cours de la phase de brassage (R), le contenu du bassin de sédimentation (2) est homogénéisé.

3. Procédé selon la revendication 2, **caractérisé en ce qu'**au cours de la phase de brassage (R), les boues sont ramenées dans le bassin d'activation (1) jusqu'à l'obtention d'à peu près la même densité en substances sèches (TS) que dans le bassin de sédimentation (2).

4. Procédé selon la revendication 3, **caractérisé en ce que** pendant la phase de brassage (R), le contenu du bassin d'activation (1) est mélangé avec celui du bassin de sédimentation (2) jusqu'à l'obtention d'une homogénéisation complète.

5. Procédé selon la revendication 1, **caractérisé en ce que** la phase de dépôt préliminaire (V) est étendue jusqu'à ce que la surface de boue se soit abaissée d'au moins 50 cm pour que, dans la mesure du possible, aucun flocon de boue ne tombe dans l'écoulement.

6. Procédé selon l'une des revendications 1 à 5, **caractérisé en ce que** l'écoulement de l'excédent de boues se déroule pendant deux minutes par exemple à la fin de la phase de dépôt préliminaire (V), moyennant quoi une pompe conduit l'eau décantée/le mélange de boues dans un réservoir à boues et l'excédent d'eau trouble est reconduit dans le dispositif d'épuration.

7. Procédé selon l'une des revendications 1 à 6, **caractérisé en ce que** l'écoulement de l'excédent de boues dépend de la teneur en substances sèches mesurée dans le bassin de sédimentation (2) par un densimètre.

8. Dispositif de mise en oeuvre du procédé selon l'une des revendications 1 à 7, comprenant un bassin d'activation (1) et un bassin de sédimentation (2) connecté en aval du premier, ainsi qu'un dispositif de retour des boues du bassin de sédimentation (2) dans le bassin d'activation (1), **caractérisé en ce que** les deux bassins sont adjacents et sont reliés au niveau du sol par une ouverture (6).

9. Dispositif de mise en oeuvre du procédé selon l'une des revendications 1 à 7, **caractérisé en ce que** le bassin de sédimentation (2) présente au moins un écoulement (10) situé entre 20 et 30 cm environ au-dessous de la surface de l'eau, écoulement auquel un canal sous pression (11) est raccordé par une vanne d'arrêt (12) et un déversoir fixe (13).
